# EUROPEAN PATENT SPECIFICATION

(11) **EP 2 903 117 B1**
(45) Date of publication and mention of the grant of the patent: **25.11.2026**
(21) Application number: 15151400.7
(22) Date of filing: 16.01.2015
(51) Int. Cl.: H02J 3/36, H04L 1/00, H04L 1/20

(54) **Device and method for controlling high voltage direct current transmission system**
Vorrichtung und Verfahren zur Steuerung eines Übertragungssystems von Hochspannungsgleichstrom
Dispositif et procédé de commande de système de transmission de courant continu haute tension

(30) Priority: 23.01.2014 KR 20140008586
(43) Date of publication of application: 05.08.2015
(73) Proprietor: LSIS Co., Ltd., Anyang-si, Gyeonggi-do 431-848 (KR)
(72) Inventor: Lee, Seung Hun, 431-848 Anyang-si, Gyeonggi-do (KR); Kim, Eung Soo, 431-848 Anyang-si, Gyeonggi-do (KR); Kim, Jong Bae, 431-848 Anyang-si, Gyeonggi-do (KR)
(74) Representative: K&L Gates LLP

(56) References cited:
- CN-A- 101 958 541
- GB-A- 2 002 974
- JP-A- S 637 169
- US-A- 6 130 619

## Description

### BACKGROUND

The present disclosure relates to a device and method for controlling a high voltage direct current (HVDC) transmission system.

HVDC transmission is performed by converting alternating current (AC) power generated from a power station into DC power to transmit the DC power and then re-converting the DC power into the AC power at a power receiving point to supply power. The HVDC transmission may enable efficient and economical power transmission through a voltage increase that is the advantage of AC power transmission. Also, the HVDC transmission may overcome many limitations of the AC transmission.

A HVDC transmission system may be classified into current-type HVDC using a thyristor and voltage-type HVDC using IGB or GTO. The current-type HVDC is suitable for large power transmission and the voltage-type HVDC is suitable for system stabilization or small power transmission due to high loss.

In particular, the valve controller of the HVDC transmission system may affect the performance of the entire HVDC transmission system depending on how stably measured data may be maintained and controlled in DC transmission. There is a need for the stability and smooth data flow control of an HVDC transmission system structure.

In general, data state monitoring consumes a long time to check the cause of an event and to perform corresponding processing while monitoring by software.

That is, there is a need for a hardware design considering high data reliability and possible events for a state contact of a physical line connected to the HVDC transmission system and a state contact of data. However, since a typical HVDC transmission system is configured to analyze measurement data transmitted to the system and simply distribute analyzed data to a valve control module when the measurement data is transmitted to the system, there is a limitation in that it is not easy to analyze a cause of an event and process the event.

JP 63 00 7169 relates to enhancing the reliability of a controller for an AC/DC converter by controlling with constant current a power inverter connected with a weak AC system to reduce a voltage variation, thereby preventing a system from being unnecessarily stopped.

GB 2 002 974 A discloses a direct current power transmission system.

### SUMMARY

Embodiments provide a device and method for controlling a high voltage direct current (HVDC) transmission system that enable data validity and a connection state to be checked based on data obtained from the HVDC transmission system.

Embodiments provide a device and method for controlling a high voltage direct current (HVDC) transmission system that enable the effectiveness of data obtained from the HVDC transmission system and a connection state to be checked so that it is possible to output control data for valve control having high reliability.

In one embodiment, a device for controlling a high voltage direct current (HVDC) transmission system includes: a communication unit communicating with a control device; a control unit obtaining a data signal received through the communication unit, checking a data line error and a line connection error based on an obtained data signal, and outputting a control signal based on the data signal; and an output unit outputting the control signal to a valve control device based on control of the control unit.

In another embodiment, a method of controlling a HVDC transmission system includes: checking a data error and a line connection error depending on presence and absence of an error data output of the data signal and on presence and absence of an input of the data signal based on an obtained data signal; and notifying that the data error or line connection error is sensed.

The details of one or more embodiments are set forth in the accompanying drawings and the description below. Other features will be apparent from the description and drawings, and from the claims.

### BRIEF DESCRIPTION OF THE DRAWINGS

Fig. 1 is a block diagram of a control device of a high voltage direct current (HVDC) transmission system to which an embodiment is applied.
Fig. 2 illustrates the form of data obtained from the control device of the HVDC transmission system according to an embodiment.
Fig. 3 is a flow chart for data error verification according to an embodiment.
Fig. 4 is a flow chart for data error verification according to an embodiment.

### DETAILED DESCRIPTION OF THE EMBODIMENTS

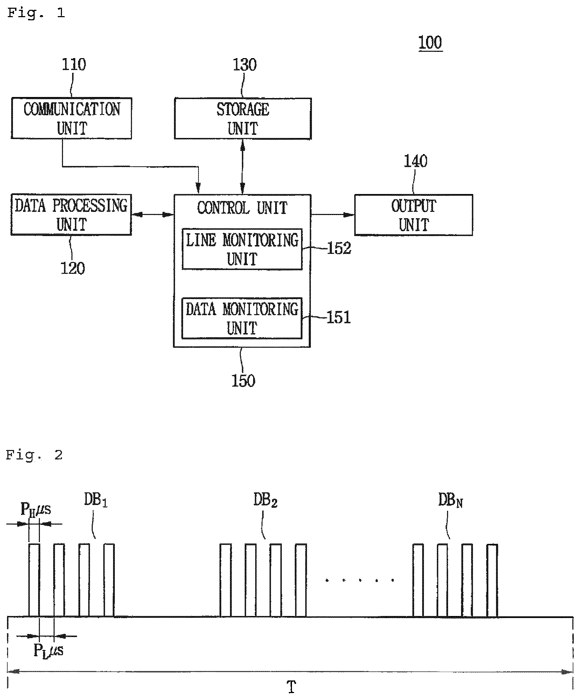

Fig. 1 is a block diagram of a control device of a high voltage direct current (HVDC) transmission system to which an embodiment is applied, and Fig. 2 illustrates the form of data obtained from the control device of the HVDC transmission system according to an embodiment.

Referring to Figs. 1 and 2, a control device 100 of the HVDC transmission system according to an embodiment may includes a communication unit 110, a data processing unit 120, a storage unit 130, an output unit 140, and a control unit 150.

The communication unit 110 may receive data on each device connected to the HVDC transmission system.

The data processing unit 120 may decode data received through the communication unit 110 to output decoded data to the control unit 150. Also, it may encode data analyzed and processed by the control unit 150 after the decoding to output encoded data to a higher application block.

The storage unit 130 may store data received from the communication unit 110 or store information on how the data has been processed. Also, the storage unit 130 may store data checked by the control unit 150, reference information for checking a line error, and check result information.

The output unit 140 may data calculated and processed by the data processing unit 120 and the control unit 150 to a valve control unit (not shown) as a valve control value.

The control unit 150 may monitors the state of data obtained from each controller module connected to the HVDC transmission system obtained through the communication unit 110 and generate valve control data accordingly.

In particular, the control unit 150 according to an embodiment includes a data monitoring unit 151 and a line monitoring unit 152.

The data monitoring unit 151 may detect errors of data measured and applied from controllers and check the states of data. The data monitoring unit 151 may check the presence and absence of the errors of data based on pulse data including M groups including N signals as shown in Fig. 2.

The line monitoring unit 152 may check the reception (receiving rate) of data preset based on the same data as that monitored by the data monitoring unit 151 to check the presence and absence of a line connection.

The type of data obtained in an embodiment may be M data groups DMn signals including N pulse signals for a certain period T as shown in Fig. 2. The data obtained from the control device 100 of the HVDC transmission system according to an embodiment may be a pulse signal received for 4 ms (P_{H}ms) at an interval of 4 ms (P_{L}ms) for a period T of 16.67 ms. The data input period, section and interval may vary depending on an embodiment.

Each of the data signals includes thyristor conduction information, gamma operation information, and break-over diode (BOD) information.

The control unit 150 monitors a data error and line connection according to various pieces of information included in the data signal and depending on the presence and absence of an input of a signal.

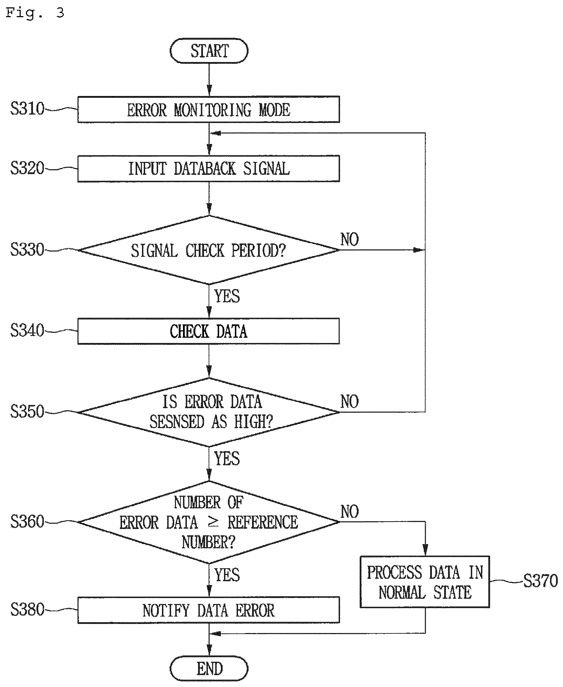

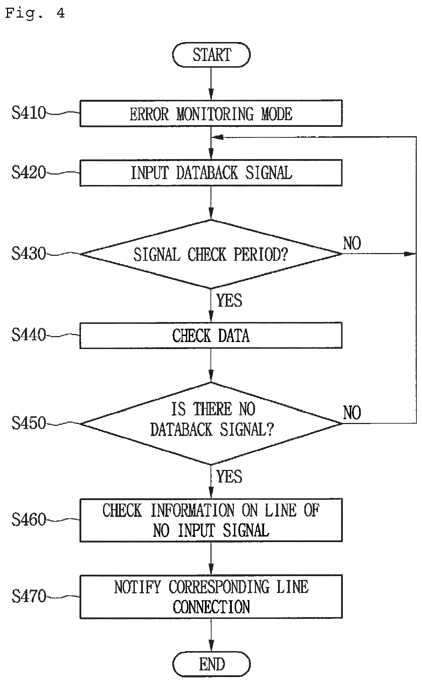

In the following, data and line error monitoring operations according to an embodiment are described in detail with reference to Figs. 3 and 4.

Fig. 3 is a flow chart for data error verification according to an embodiment.

Although it is described as an example that the control unit 150 for the data error verification according to an embodiment is performed at the monitoring unit 151 included in the control unit, the function may be a portion of the overall operations of the control unit 150. The data monitoring unit 151 may be configured in the control unit 150 to be integrated into the control unit 150 or configured in a separate external device.

Referring to Fig. 3, the control unit 150 according to an embodiment may obtain data from control devices connected to the HVDC transmission system and operate in an error monitoring mode in which obtained data is monitored, in step S310.

The control unit 150 may receive the data signals DB1 to DBN as shown in Fig. 2 according to the error monitoring mode in step S320.

The control unit 150 may determines whether a check period for checking the presence and absence of an error and state information on the data signal has arrived in step S330.

The check period may correspond to a pulse input period included in the data signal and is described with e.g., 4 ms in an embodiment.

The control unit 150 may check the state of data and the presence and absence of error data based on pulse signal data included in the data signal when the check period of the data signal has arrived.

The control unit 150 may check whether error data included in each data in the pulse signal data is output to be high in step S350.

When there is no error in data obtained from a control device, error data may be included and output as a low signal in the pulse signal, and when there is an error in the data, the error data may be included and output as a high signal in a pulse signal of corresponding data.

Thus, the control unit 150 may determine whether pulse signal data has error data having a high signal, and when there is error data, it is possible to count the number of error data.

The control unit 150 may determine whether the number of counted error data or the number of pulse signals of error data represented by high is equal to or larger than a reference number in step S360. The reference number may be a level at which error data affects system and valve control. Thus, the reference number is not limited and may vary according to a system or user setting.

When the number of the counted error data is smaller than the reference number, the control unit 150 may determine that obtained data is in a normal state and output the data to a valve control device (not shown).

On the contrary, when the number of the counted error data is equal to or larger than the reference number, the control unit 150 may determine that the obtained data is error data and output a corresponding result in various forms, in step S380.

Fig. 4 is a flow chart for line connection error verification according to an embodiment.

Although it is described as an example that the control unit 150 for the line connection error verification is performed at the line monitoring unit 152 included in the control unit 150, the function may be a portion of the overall operations of the control unit 150. The line monitoring unit 152 may be configured in the control unit 150 to be integrated into the control unit 150 or configured in a separate external device.

Referring to Fig. 4, the control unit 150 according to an embodiment may obtain data from control devices connected to the HVDC transmission system by using physical lines and operate in an error monitoring mode in which obtained data is monitored, in step S410.

The control unit 150 may receive the data signals DB1 to DBN as shown in Fig. 2 according to the error monitoring mode, in step S420.

The control unit 150 may determine whether a check period for checking the presence and absence of an error and The check period may correspond to a pulse input period included in the data signal and is described with e.g., 4 ms to be the same as the data check period of the data error verification in an embodiment.

The control unit 150 may check the presence and absence of no input data based on pulse signal data included in the data signal when the check period of the data signal has arrived, in step S440.

Simultaneously with or separately from the data error verification, the control unit 150 check at the line monitoring unit 152 based on obtained data whether there is a data signal not received among preset N (22 in an embodiment) data signals.

The control unit 150 may check based on the data signal whether a line signal is input to a line connected physically to control devices and check whether there is on input data signal, in step S450.

The control unit 150 may check information on a physical line receiving a signal not input when no input signal among data signals is checked in step S460.

The control unit 150 may define that the no input data signal is an event generated by the error of a physical line connected to a control device, and check information on a line transmitting and receiving the no input signal.

The control unit 150 may check information on a checked line and the no input signal and output a corresponding error notification in step S470.

Although an embodiment describes that the error of a signal line to which a data signal is not input is checked and a notification is output, it may be processed that a corresponding signal line has an error event when the data signal is not input a certain number of times or more.

Although an embodiment describes check and output operations of a data error and a line error separately based on the signal input from control devices, it is possible to perform data error verification and line verification simultaneously at the data monitoring unit 151 and the line monitoring unit 152 of the control unit 150 based on the signal.

Embodiments are mainly described above. However, they are only examples and do not limit the present invention. A person skilled in the art may appreciate that many variations and applications not presented above may be implemented without departing from the essential characteristic of embodiments. For example, each component specifically represented in embodiments may vary.

In addition, it should be construed that differences related to such a variation and such an application are included in the scope of the present invention defined in the following claims.

## Claims

1. A device (100) for controlling a High Voltage Direct Current ,HVDC, transmission system, the device comprising:
a communication unit (110) configured to be connected to at least one controller module, wherein the communication unit (110) is further configured to communicate with a control device;
a control unit (150) configured to:
obtain a data signal received through the communication unit, wherein the data signal includes thyristor conduction information, gamma operation information, and break-over diode (BOD) information;
generate control data by monitoring the state of data obtained from each controller module connected to the communication unit (110); and
check a data error and a line connection error based on the obtained data signal; and
an output unit (140) configured to output a notification in the form of a control signal to a valve control device that the data error or the line connection error occurs,
**characterized in:**
**that** the control unit (150) comprises a data monitoring unit (151) and a line monitoring unit (152),
**that** the data monitoring unit (151) is configured to
monitor a data error from the obtained data signal and extract error data;
extract a signal that the error data included in the data signal is sensed as high; and
extract a data signal including a corresponding signal as the error data, that the line monitoring unit is configured to:
monitor a line connection error from the obtained data signal and extract the line connection error;
check a presence and absence of an input of the data signal; and
identify a signal line having no data signal as a line connection,
**that** the control unit (150) is configured to obtain the data signal at a check period for checking a presence and absence of an error state information.

2. The device according to claim 1, wherein the data signal comprises N data groups comprising M pulse signals.

3. The device according to claim 2, wherein the control unit (150) is configured to check the data signal at a certain interval corresponding to a time when the pulse signal is input.

4. The device according to claim 1, wherein the control unit (150) is configured to extract a corresponding data signal as the error data when a number of signals sensed as high is equal to or larger than a reference number.

5. The device according to claim 1, wherein the line monitoring unit (152) is configured to identify a corresponding line as a connection when the data signal is not input for a certain number of times or more.

6. The device according to claim 1, wherein the control unit (150) is configured to check and extract the presence and absence of a data error and line connection together based on the obtained data signal.

7. A method of controlling a High Voltage Direct Current, HVDC, transmission system, the method comprising:
checking (S310-S360) a data error and a line connection error depending on a presence and absence of an error data output of a data signal and on a presence and absence of an input of the data signal based on the obtained data signal; and
notifying (S380) that the data error or the line connection error is sensed;
the method being **characterized by**
obtaining (S330) the data signal at a check period for checking a presence and absence of an error and state information; and
checking the data error based on the data signal comprises identifying a corresponding data signal as a data error when data error signals of the data signals are sensed as high,
checking the line connection error comprises identifying a line connected to a corresponding data group as a connection when no input data signal among the data signals is sensed.

8. The method according to claim 7, wherein the data signal comprises N data groups comprising M pulse signals.

9. The method according to claim 7, wherein checking the data error comprises identifying as the data error when a number of error signals sensed as high is equal to or larger than a reference number.

## Patentansprüche

1. Vorrichtung (100) zum Steuern eines Hochspannungsgleichstromübertragungssystems, HVDC-Übertragungssystems, die Vorrichtung umfassend:
eine Kommunikationseinheit (110), die konfiguriert ist, um mit mindestens einem Steuermodul verbunden zu sein, wobei die Kommunikationseinheit (110) ferner konfiguriert ist, um mit einer Steuervorrichtung zu kommunizieren;
eine Steuereinheit (150), die konfiguriert ist zum:
Erhalten eines Datensignals, das durch die Kommunikationseinheit empfangen wird, wobei das Datensignal Thyristorleitinformationen, Gammabetriebsinformationen und Kippdiodeninformationen (BOD-Informationen) einschließt;
Erzeugen von Steuerdaten durch ein Überwachen des Zustands von Daten, die von jedem Steuermodul erhalten werden, das mit der Kommunikationseinheit (110) verbunden ist; und
Prüfen eines Datenfehlers und eines Leitungsverbindungsfehlers basierend auf dem erhaltenen Datensignal; und
eine Ausgabeeinheit (140), die konfiguriert ist, um eine Benachrichtigung in der Form eines Steuersignals an eine Ventilsteuervorrichtung auszugeben, dass der Datenfehler oder der Leitungsverbindungsfehler auftritt,
**dadurch gekennzeichnet:**
**dass** die Steuereinheit (150) eine Datenüberwachungseinheit (151) und eine Leitungsüberwachungseinheit (152) umfasst,
**dass** die Datenüberwachungseinheit (151) konfiguriert ist zum
Überwachen eines Datenfehlers aus dem erhaltenen Datensignal Extrahieren von Fehlerdaten;
Extrahieren eines Signals, dass die Fehlerdaten, die in dem Datensignal eingeschlossen sind, als hoch erfasst werden; und
Extrahieren eines Datensignals, das ein entsprechendes Signal als die Fehlerdaten einschließt, dass die Leitungsüberwachungseinheit konfiguriert ist zum:
Überwachen eines Leitungsverbindungsfehlers aus dem erhaltenen Datensignal und Extrahieren des Leitungsverbindungsfehlers;
Prüfen einer Anwesenheit und einer Abwesenheit einer Eingabe des Datensignals; und
Identifizieren einer Signalleitung, die kein Datensignal aufweist, als eine Leitungsverbindung, dass die Steuereinheit (150) konfiguriert ist, um das Datensignal in einer Prüfperiode zum Prüfen einer Anwesenheit und einer Abwesenheit von Fehlerzustandsinformationen zu erhalten.

2. Vorrichtung nach Anspruch 1, wobei das Datensignal N Datengruppen umfasst, umfassend M Pulssignale.

3. Vorrichtung nach Anspruch 2, wobei die Steuereinheit (150) konfiguriert ist, um das Datensignal in einem bestimmten Intervall zu prüfen, das einem Zeitpunkt entspricht, zu dem das Pulssignal eingegeben wird.

4. Vorrichtung nach Anspruch 1, wobei die Steuereinheit (150) konfiguriert ist, um ein entsprechendes Datensignal als die Fehlerdaten zu extrahieren, wenn eine Anzahl von Signalen, die als hoch erfasst werden, gleich oder größer als eine Referenzanzahl ist.

5. Vorrichtung nach Anspruch 1, wobei die Leitungsüberwachungseinheit (152) konfiguriert ist, um eine entsprechende Leitung als eine Verbindung zu identifizieren, wenn das Datensignal für eine bestimmte Anzahl von Malen oder mehr nicht eingegeben wird.

6. Vorrichtung nach Anspruch 1, wobei die Steuereinheit (150) konfiguriert ist, um die Anwesenheit und die Abwesenheit eines Datenfehlers und einer Leitungsverbindung zusammen basierend auf dem erhaltenen Datensignal zu prüfen und zu extrahieren.

7. Verfahren zum Steuern eines Hochspannungsgleichstromübertragungssystems, HVDC-Übertragungssystems, das Verfahren umfassend:
Prüfen (S310-S360) eines Datenfehlers und eines Leitungsverbindungsfehlers in Abhängigkeit von einer Anwesenheit und einer Abwesenheit einer Fehlerdatenausgabe eines Datensignals und von einer Anwesenheit und einer Abwesenheit einer Eingabe des Datensignals basierend auf dem erhaltenen Datensignal; und
Benachrichtigen (S380), dass der Datenfehler oder der Leitungsverbindungsfehler erfasst wird;
wobei das Verfahren **gekennzeichnet ist durch**
Erhalten (S330) des Datensignals in einer Prüfperiode zum Prüfen einer Anwesenheit und einer Abwesenheit eines Fehlers und von Zustandsinformationen; und
wobei das Prüfen des Datenfehlers basierend auf dem Datensignal das Identifizieren eines entsprechenden Datensignals als einen Datenfehler umfasst, wenn Datenfehlersignale der Datensignale als hoch erfasst werden,
wobei das Prüfen des Leitungsverbindungsfehlers das Identifizieren einer Leitung, die mit einer entsprechenden Datengruppe verbunden ist, als eine Verbindung umfasst, wenn kein Eingangsdatensignal unter den Datensignalen erfasst wird.

8. Verfahren nach Anspruch 7, wobei das Datensignal N Datengruppen umfasst, umfassend M Pulssignale.

9. Verfahren nach Anspruch 7, wobei das Prüfen des Datenfehlers das Identifizieren als den Datenfehler umfasst, wenn eine Anzahl von Fehlersignalen, die als hoch erfasst werden, gleich oder größer als eine Referenzanzahl ist.

## Revendications

1. Dispositif (100) permettant de commander un système de transmission de courant continu haute tension, CCHT, le dispositif comprenant :
une unité de communication (110) configurée pour être connectée à au moins un module de commande, dans lequel l'unité de communication (110) est configurée en outre pour communiquer avec un dispositif de commande ;
une unité de commande (150) configurée pour :
obtenir un signal de données reçu par l'intermédiaire de l'unité de communication, dans lequel le signal de données comporte des informations de conduction de thyristor, des informations de fonctionnement gamma, et des informations de diode de retournement (BOD) ;
générer des données de commande en surveillant l'état de données obtenues auprès de chaque module de commande connecté à l'unité de communication (110) ; et
vérifier une erreur de données et une erreur de connexion de ligne en fonction du signal de données obtenu ; et
une unité de sortie (140) configurée pour délivrer en sortie une notification, sous la forme d'un signal de commande vers un dispositif de commande de vanne, du fait que l'erreur de données ou l'erreur de connexion de ligne se produit,
**caractérisé par** :
l'unité de commande (150) comprenant une unité de surveillance de données (151) et une unité de surveillance de ligne (152),
l'unité de surveillance de données (151) étant configurée pour
surveiller une erreur de données à partir du signal de données obtenu et extraire des données d'erreur ;
extraire un signal indiquant que les données d'erreur incluses dans le signal de données sont détectées comme étant hautes ; et
extraire un signal de données comportant un signal correspondant en tant que données d'erreur, l'unité de surveillance de ligne étant configurée pour :
surveiller une erreur de connexion de ligne à partir du signal de données obtenu et extraire l'erreur de connexion de ligne ;
vérifier une présence et une absence d'une entrée du signal de données ; et
identifier une ligne de signal n'ayant aucun signal de données en tant que connexion de ligne, l'unité de commande (150) étant configurée pour obtenir le signal de données à une période de vérification permettant de vérifier une présence et une absence d'informations d'état d'erreur.

2. Dispositif selon la revendication 1, dans lequel le signal de données comprend N groupes de données comprenant M signaux d'impulsion.

3. Dispositif selon la revendication 2, dans lequel l'unité de commande (150) est configurée pour vérifier le signal de données à un certain intervalle correspondant à un moment où le signal d'impulsion est entré.

4. Dispositif selon la revendication 1, dans lequel l'unité de commande (150) est configurée pour extraire un signal de données correspondant en tant que données d'erreur lorsqu'un nombre de signaux détectés comme étant hauts est égal ou supérieur à un nombre de référence.

5. Dispositif selon la revendication 1, dans lequel l'unité de surveillance de ligne (152) est configurée pour identifier une ligne correspondante en tant que connexion lorsque le signal de données n'est pas entré pendant un certain nombre de fois ou plus.

6. Dispositif selon la revendication 1, dans lequel l'unité de commande (150) est configurée pour vérifier et extraire la présence et l'absence d'une erreur de données et d'une connexion de ligne conjointement en fonction du signal de données obtenu.

7. Procédé de commande d'un système de transmission de courant continu haute tension, CCHT, le procédé comprenant :
la vérification (S310-S360) d'une erreur de données et d'une erreur de connexion de ligne en dépendance d'une présence et d'une absence d'une sortie de données d'erreur d'un signal de données et d'une présence et d'une absence d'une entrée du signal de données en fonction du signal de données obtenu ; et
la notification (S380) du fait que l'erreur de données ou l'erreur de connexion de ligne est détectée ;
le procédé étant **caractérisé par**
l'obtention (S330) du signal de données à une période de vérification permettant de vérifier une présence et une absence d'informations d'erreur et d'état ; et
la vérification de l'erreur de données en fonction du signal de données comprend l'identification d'un signal de données correspondant en tant qu'erreur de données lorsque des signaux d'erreur de données des signaux de données sont détectés comme étant hauts,
la vérification de l'erreur de connexion de ligne comprend l'identification d'une ligne connectée à un groupe de données correspondant en tant que connexion lorsqu'aucun signal de données d'entrée parmi les signaux de données n'est détecté.

8. Procédé selon la revendication 7, dans lequel le signal de données comprend N groupes de données comprenant M signaux d'impulsion.

9. Procédé selon la revendication 7, dans lequel la vérification de l'erreur de données comprend l'identification en tant qu'erreur de données lorsqu'un nombre de signaux d'erreur détectés comme étant hauts est égal ou supérieur à un nombre de référence.
